# FASCICULE DE BREVET EUROPEEN

(11) **EP 3 154 844 B1**
(45) Date de publication et mention de la délivrance du brevet: **08.01.2020**
(21) Numéro de dépôt: 15733787.4
(22) Date de dépôt: 03.06.2015
(51) Int. Cl.: B62D 29/00, F16B 5/02, F16B 43/00, F16B 11/00, B62D 25/20

(54) **DISPOSITIF DE FIXATION D'UN ACCESSOIRE SUR UN RÉSERVOIR DE CARBURANT DE VÉHICULE AUTOMOBILE**
VORRICHTUNG ZUR BEFESTIGUNG EINES ZUBEHÖRS AN EINEM KRAFTSTOFFTANK EINES KRAFTFAHRZEUGS
DEVICE FOR ATTACHING AN ACCESSORY TO A MOTOR VEHICLE FUEL TANK

(30) Priorité: 16.06.2014 FR 1455462
(43) Date de publication de la demande: 19.04.2017
(73) Titulaire: Renault S.A.S., 92100 Boulogne-Billancourt (FR)
(72) Inventeur: KUHN, Nicolas, 76210 Gruchet la Vallasse (FR)
(86) Numéro de dépôt international: PCT/FR2015/051463
(87) Numéro de publication internationale: WO 2015/193577

(56) Documents cités:
- EP-A1- 0 987 449
- DE-A1-102013 204 583
- FR-A1- 2 845 653

## Description

### DOMAINE TECHNIQUE DE L'INVENTION

L'invention concerne un dispositif de fixation d'un composant, par exemple d'un accessoire, sur un équipement de véhicule, et par exemple pour la fixation d'une plaque de protection ou d'un élément d'échange thermique sur un réservoir de carburant de véhicule automobile.

### ARRIERE PLAN TECHNIQUE DE L'INVENTION

L'invention concerne plus particulièrement un dispositif de fixation, de conception générale connue, du type comportant un élément principal en forme de plot, d'orientation axiale verticale, formant entretoise entre l'équipement et l'accessoire que l'on désire fixer sur l'équipement.

La fixation peut bien entendu nécessiter la mise en œuvre de plusieurs dispositifs de fixation, c'est-à-dire de plusieurs plots répartis en différents points.

De manière connue, un tel plot est de forme générale cylindrique, à génératrices circulaires ou non, et il est prévu pour être fixé sur l'équipement à demeure, notamment par collage ou par soudage dans le cas de sa fixation sur un réservoir de carburant dont l'enveloppe externe est en matériau synthétique.

Outre le plot principal, un tel dispositif de fixation comporte, un ensemble du type vis-écrou comportant un premier élément constitué par une tige filetée qui s'étend axialement à travers un trou du composant que l'on désire fixer et un deuxième élément complémentaires formant écrou, l'un des deux éléments de l'ensemble vis-écrou étant solidaire du plot, tandis que l'autre élément est indépendant et est apte à être vissé, et dévissé, avec l'élément solidaire du plot.

Selon une conception connue d'un tel dispositif de fixation, le plot comporte un corps apte à être fixé sur l'équipement (par exemple sur le réservoir) et sa partie centrale, préalablement taraudée ou « auto-taraudable », est apte à recevoir une vis de fixation qui, après avoir été introduite dans le trou du composant, est vissée dans le plot.

Une telle conception a notamment pour inconvénient de ne pas être adaptée à des efforts ou couples de serrage importants, car un serrage excessif de la vis aboutit à une destruction de la partie centrale du plot dans laquelle on tente d'effectuer le vissage du tronçon fileté de la tige de la vis de fixation.

Il est de plus souhaitable de pouvoir disposer d'une nouvelle conception présentant des possibilités de "modularité", c'est-à-dire de pouvoir, en utilisant une conception de base commune, réaliser et disposer d'une série de dispositifs de fixation notamment adaptés à des ensembles vis-écrou différents, notamment quant à leurs dimensions.

Un dispositif de fixation connu est divulgué dans FR 2 845 653 A1.

### BREF RESUME DE L'INVENTION

L'invention, telle que déterminée par les revendications, propose un dispositif de fixation du type mentionné précédemment, caractérisé en ce que le plot comporte un logement axial traversant dans lequel est agencée la vis qui est solidaire du plot et dont la tige filetée fait saillie axialement vers le bas au-delà d'une face transversale inférieure du plot.

Grâce à une telle conception, le plot intègre la vis de l'ensemble du type vis-écrou et l'écrou peut être un écrou métallique indépendant complémentaire de la vis, les opérations de vissage et de serrage s'effectuant alors entre deux éléments classiques métalliques d'un ensemble vis-écrou.

Selon d'autres caractéristiques de l'invention :
- le plot comporte :
   -- un corps annulaire périphérique formant embase dont une face transversale supérieure est apte à être fixée sur l'équipement, notamment par collage ou par soudage, et qui délimite une cavité interne ;
   -- et une partie centrale qui est agencée dans ladite cavité interne, qui s'étend axialement vers le bas et dans laquelle est formé le logement axial traversant dans lequel est agencée la vis.
- la cavité est une cavité étagée comportant un premier étage supérieur, ou partie supérieure, de plus grand diamètre et un deuxième étage inférieur, ou partie inférieure, de plus petit diamètre, et la partie centrale est de forme cylindrique étagée complémentaire ;
- l'étage inférieur de la partie centrale s'étend axialement vers le bas hors du corps annulaire, et l'étage inférieur de la partie centrale est délimité par une face transversale inférieure d'appui pour le composant à fixer ;
- la partie centrale est immobilisée en rotation par rapport au corps annulaire périphérique ;
- le logement axial traversant dans lequel est agencée la vis comporte une portion supérieure dont le profil est complémentaire du profil de la tête de la vis, et une portion inférieure de profil complémentaire de celui de la tige de la vis ;
- le corps annulaire et la partie centrale sont deux pièces réalisées par moulage en matériau(x) synthétique(s) ;
- le corps annulaire est une pièce réalisée par moulage en polyéthylène haute densité, et la partie centrale est réalisée par moulage en polyamide.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique en perspective de dessous illustrant un dispositif de fixation selon l'invention utilisé pour la fixation d'un composant plan de refroidissement sous la face inférieure d'un réservoir de véhicule automobile ;
- la figure 2 est une vue en section par un plan vertical et longitudinal passant par l'axe de l'ensemble vis-écrou du dispositif de fixation de la figure 1 ;

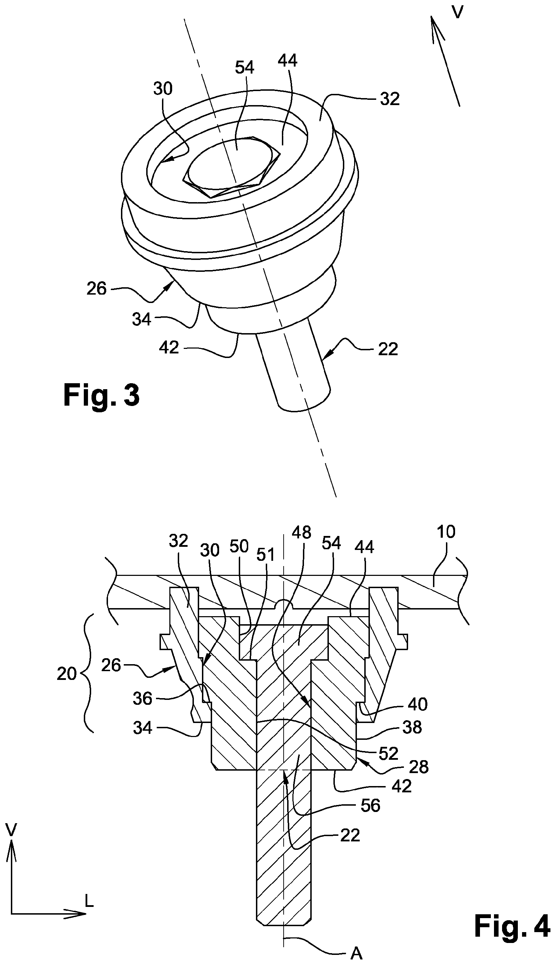

- la figure 3 est une vue schématique en perspective du plot du dispositif de fixation selon l'invention représenté aux figures 1 et 2 ;
- la figure 4 est une autre représentation en section axiale du plot selon l'invention de la figure 3 fixé sous la face inférieure d'une paroi du réservoir de carburant ;
- les figures 5 et 6 sont deux vues schématiques en perspective, selon deux angles de vue opposés, d'une variante de réalisation d'un plot selon l'invention représenté sans sa vis de fixation ; et
- les figures 7 à 9 sont trois vues, selon différents angles de représentation, d'encore une autre variante de représentation d'un plot sans sa vis de fixation.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

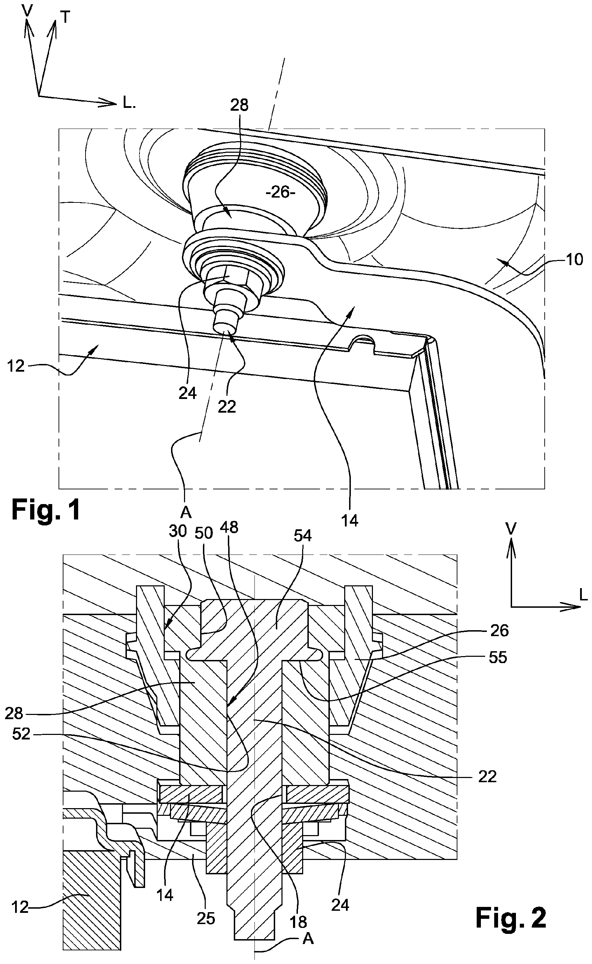

On a représenté aux figures, et notamment à la figure 1, la face externe d'une paroi inférieure 10 appartenant ici à un réservoir de carburant de véhicule automobile.

On a aussi représenté aux figures, et notamment aux figures 1 et 2, un composant rapporté sous la face inférieure 10 qui est ici un composant en forme de plaque 12 ayant une fonction d'échange thermique, tel qu'un refroidisseur.

Ce composant 12 comporte notamment au moins une patte 14 de fixation pour son montage et sa fixation en dessous du réservoir de carburant.

La fixation est réalisée au moyen de plusieurs dispositifs de fixation dont l'un est représenté sur les figures.

Afin de permettre sa fixation, la patte de fixation 14 du composant 12 comporte un trou 18.

Le dispositif de fixation selon l'invention est constitué par un plot 20 formant entretoise entre la paroi 10 du réservoir et la patte de fixation 14, et par un ensemble vis-écrou, ou du type vis-écrou comportant une vis de fixation 22 qui est intégrée au plot 20 et un écrou de fixation 24 qui est apte à être vissé sur le tronçon inférieur fileté de la vis 22, avec interposition d'une rondelle élastique 25.

Dans le mode de réalisation préféré illustré aux figures, le plot 20 est réalisé en deux parties constituées d'un corps annulaire périphérique 26 formant socle ou embase et d'une partie centrale 28 qui est agencée dans une cavité cylindrique interne 30 formée dans le corps 26.

Le corps 26 est ici une pièce de forme générale tubulaire réalisée par moulage en matière synthétique dont la partie supérieure 32 est destinée à être fixée à demeure, par exemple par collage ou soudage si les matériaux sont compatibles, sur la face inférieure de la paroi 10 du réservoir.

La partie 32 peut être continue ou en plusieurs zones discrètes.

A sa partie inférieure, le corps tubulaire 26 est délimité par une face transversale inférieure 34 d'orientation horizontale.

La cavité interne 30 est une cavité cylindrique étagée débouchante aux deux extrémités verticales du corps annulaire 26.

La cavité 30 est étagée de manière à délimiter au moins un épaulement radial interne 36 orienté verticalement vers le haut.

La cavité 30 loge la partie centrale 28 du plot 20 qui se présente sous la forme d'un élément tubulaire dont la paroi latérale cylindrique 38 est étagée de manière complémentaire de celle de la cavité 30 en délimitant un épaulement radial inférieur 40 qui coopère avec l'épaulement 36 de la cavité 30 pour définir la position verticale relative vers le bas de la partie centrale 28 par rapport au corps 26.

La partie centrale 28 fait saillie axialement vers le bas au-delà de la face transversale inférieure 34 du corps 26 et elle est elle-même délimitée axialement vers le bas par une face transversale inférieure plane d'appui 42 contre laquelle, en utilisation, la portion en vis-à-vis de la face supérieure de la patte de fixation 14 vient prendre appui.

La partie centrale 28 est délimitée verticalement vers le haut par une face transversale annulaire 44 qui est située axialement décalée vers le bas par rapport à la partie 32 de fixation du corps 26.

Un logement axial traversant 48 est agencé centralement dans la partie centrale 28 qu'il traverse verticalement de part en part.

Le logement 48 est ici un logement cylindrique circulaire étagé comportant une portion supérieure 50, ou étage supérieur, de plus grand diamètre ouverte verticalement vers le haut et une portion inférieure 52, ou étage inférieur, de plus petit diamètre qui débouche axialement vers le bas.

C'est le logement 48 qui reçoit la vis de fixation 22 dont la tête 54 est reçue et logée dans la partie supérieure 50, tandis que la tige 56 s'étend verticalement à travers la partie inférieure 52 et axialement au-delà de la face transversale d'appui 42 de manière à pouvoir ensuite s'étendre axialement à travers le trou 20 de la patte 14 avec son tronçon inférieur d'extrémité fileté apte à coopérer avec l'écrou 24 pour le serrage de l'assemblage.

Si la tête 54 présente un profil particulier tel qu'un profil par exemple hexagonal, la partie supérieure 50 du logement 48 est bien entendu conformée de manière complémentaire pour pouvoir loger la tête 54.

La face inférieure transversale 55 de la tête 54 est axialement en appui vers le bas contre l'épaulement radial interne 51 qui délimite la partie supérieure 50 de la partie inférieure 52 du logement 48.

Ainsi, lors de l'opération de vissage et de serrage axial du dispositif de fixation au moyen de l'écrou 24, les efforts axiaux de serrage sont transmis par la tête 54 à la partie centrale 28 qui est elle-même en appui vertical vers le bas à l'intérieur de la cavité 30 du corps 20 fixé au réservoir 10.

Le tronçon fileté de la vis 22 peut aussi être vissé ou noyé dans la partie centrale 28.

Selon un exemple de réalisation, les deux parties 26 et 28 du plot 20 sont chacune réalisée par moulage en un matériau synthétique, et notamment pour le corps annulaire 26 dans un matériau compatible avec celui du réservoir de carburant en vue de permettre la fixation par collage ou par soudage.

Selon des techniques connues, la réalisation des deux pièces 26 et 28 peut être effectuée par co-moulage ou par moulages successifs de façon à former une pièce unitaire en deux matériaux distincts.

Les dimensions du logement 48 destiné à recevoir l'élément de fixation formant vis 22 peuvent varier, lors du moulage de la partie centrale 28, en fonction de la vis que l'on souhaitera ensuite utiliser.

Une vis 22 peut elle-même constituer un insert lors de la réalisation par moulage de la partie centrale 28, la tête et une partie du tronçon fileté étant alors « noyés » dans le matériau constitutif de la partie centrale 28.

A titre de variante et d'inversion mécanique non représentée, le tronçon inférieur de l'élément de l'ensemble vis-écrou solidaire du plot 20 pourrait être constitué, non pas d'un tronçon fileté extérieurement apte à coopérer avec un écrou, mais sous la forme d'un élément taraudé intérieurement formant alors l'écrou, tandis que l'écrou 24 de l'exemple de réalisation illustré sur les figures serait remplacé par une vis complémentaire.

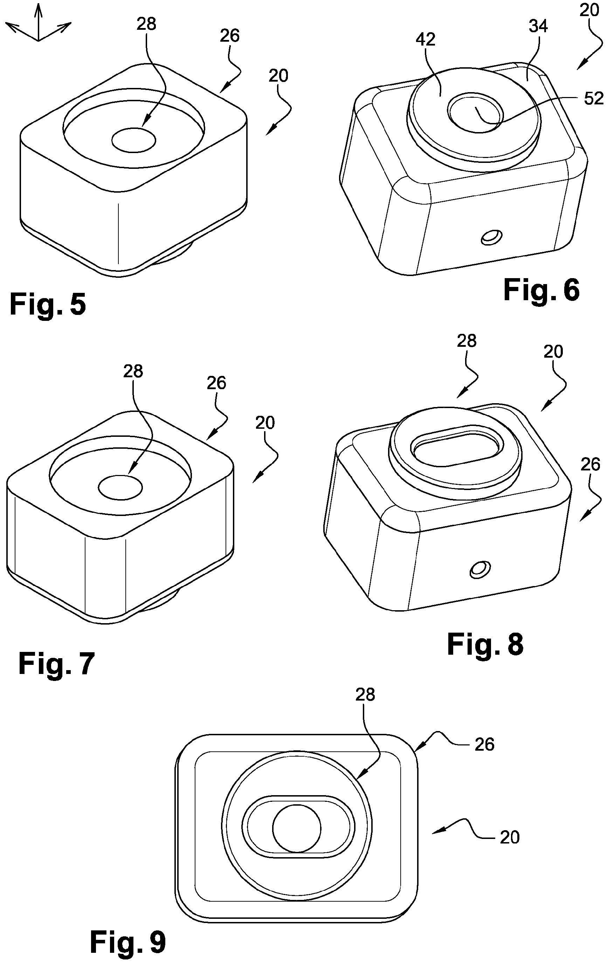

Les variantes de réalisation illustrées aux figures 5 à 9 montrent que le corps 26 n'est pas nécessairement de forme cylindrique circulaire et que la partie inférieure du logement pour la vis qui débouche dans la face transversale inférieure 42 peut être de contour circulaire ou en forme de boutonnière.

## Revendications

1. Dispositif de fixation, d'un composant (12, 14) sur un équipement (10) de véhicule automobile, notamment sur un réservoir de carburant, comportant :
- un plot (20) d'orientation axiale verticale, apte à former entretoise entre l'équipement (10) et le composant (12, 14), de forme générale cylindrique et apte à être fixé sur l'équipement, notamment par collage ou par soudage ;
- un ensemble vis-écrou (22, 24) comportant une tige filetée apte à s'étendre axialement à travers un trou (18) du composant, dont l'un des deux éléments est solidaire du plot (20) et dont l'autre est indépendant et est apte à être vissé et dévissé ;
**caractérisé en ce que** le plot (20) comporte un logement axial traversant (48) dans lequel est agencée la vis (22) qui est solidaire du plot (20) et dont la tige filetée fait saillie axialement vers le bas au-delà d'une face transversale inférieure (42) du plot (20).

2. Dispositif selon la revendication 1, **caractérisé en ce que** le plot (20) comporte :
- un corps annulaire périphérique (26) formant embase dont une face transversale supérieure est apte à être fixée sur l'équipement, notamment par collage ou par soudage, et qui délimite une cavité interne (30) ;
- une partie centrale (28) qui est agencée dans ladite cavité interne (30), qui s'étend axialement vers le bas et dans laquelle est formé le logement axial traversant (48, 50, 52) dans lequel est agencée la vis (22).

3. Dispositif selon la revendication 2, **caractérisé en ce que** ladite cavité (30) est une cavité étagée comportant un premier étage supérieur de plus grand diamètre et un deuxième étage inférieur de plus petit diamètre, et **en ce que** la partie centrale (28) est de forme cylindrique étagée complémentaire.

4. Dispositif selon l'une des revendications 2 ou 3, **caractérisé en ce que** l'étage inférieur de la partie centrale (28) s'étend axialement vers le bas hors du corps annulaire (26), et **en ce que** l'étage inférieur de la partie centrale (28) est délimité par une face transversale inférieure d'appui (42) pour le composant.

5. Dispositif selon la revendication 2, **caractérisé en ce que** la partie centrale (28) est immobilisée en rotation par rapport au corps annulaire (26).

6. Dispositif selon l'une quelconque des revendications précédentes, **caractérisé en ce que** le logement axial traversant dans lequel est agencée la vis comporte une portion supérieure (50) dont le profil est complémentaire du profil de la tête de la vis, et une portion inférieure (52) de profil complémentaire de celui de la tige de la vis.

7. Dispositif selon la revendication 2, **caractérisé en ce que** le corps annulaire (26) et la partie centrale (28) sont deux pièces réalisées par moulage en matériaux synthétiques.

8. Dispositif selon la revendication 7, **caractérisé en ce que** le corps annulaire (26) est une pièce réalisée par moulage en polyéthylène basse densité, et **en ce que** la partie centrale (28) est réalisée par moulage en polyamide.

## Patentansprüche

1. Vorrichtung zur Befestigung einer Komponente (12, 14) an einer Einrichtung (10) eines Kraftfahrzeugs, insbesondere an einem Kraftstofftank, welche aufweist:
- einen Block (20) mit vertikaler axialer Ausrichtung, der geeignet ist, ein Distanzstück zwischen der Einrichtung (10) und der Komponente (12, 14) zu bilden, von zylindrischer allgemeiner Form ist und an der Einrichtung befestigbar ist, insbesondere durch Kleben oder durch Schweißen;
- eine Schraube-Mutter-Anordnung (22, 24), die einen Gewindeschaft aufweist, der geeignet ist, sich axial durch ein Loch (18) der Komponente hindurch zu erstrecken, von deren zwei Elementen eines mit dem Block (20) fest verbunden ist und das andere unabhängig ist und anschraubbar und abschraubbar ist;
**dadurch gekennzeichnet, dass** der Block (20) eine durchgehende axiale Aufnahme (48) aufweist, in welcher die Schraube (22) angeordnet ist, die mit dem Block (20) fest verbunden ist und deren Gewindeschaft axial nach unten über eine untere Querseite (42) des Blocks (20) hinaus vorsteht.

2. Vorrichtung nach Anspruch 1, **dadurch gekennzeichnet, dass** der Block (20) aufweist:
- einen sich in Umfangsrichtung erstreckenden ringförmigen Körper (26), der einen Sockel bildet, von dem eine obere Querseite an der Einrichtung befestigbar ist, insbesondere durch Kleben oder durch Schweißen, und der einen inneren Hohlraum (30) begrenzt,
- einen mittleren Teil (28), welcher in dem inneren Hohlraum (30) angeordnet ist, welcher sich axial nach unten erstreckt und in welchem die durchgehende axiale Aufnahme (48, 50, 52) ausgebildet ist, in der die Schraube (22) angeordnet ist.

3. Vorrichtung nach Anspruch 2, **dadurch gekennzeichnet, dass** der Hohlraum (30) ein abgestufter Hohlraum ist, der eine obere erste Stufe mit größerem Durchmesser und eine untere zweite Stufe mit kleinerem Durchmesser aufweist, und dadurch, dass der mittlere Teil (28) eine komplementäre abgestufte zylindrische Form hat.

4. Vorrichtung nach einem der Ansprüche 2 oder 3, **dadurch gekennzeichnet, dass** sich die untere Stufe des mittleren Teils (28) axial nach unten aus dem ringförmigen Körper (26) hinaus erstreckt, und dadurch, dass die untere Stufe des mittleren Teils (28) von einer unteren, quer verlaufenden Anlagefläche (42) für die Komponente begrenzt wird.

5. Vorrichtung nach Anspruch 2, **dadurch gekennzeichnet, dass** der mittlere Teil (28) in Bezug auf den ringförmigen Körper (26) gegen Verdrehung gesichert ist.

6. Vorrichtung nach einem der vorhergehenden Ansprüche, **dadurch gekennzeichnet, dass** die durchgehende axiale Aufnahme, in welcher die Schraube angeordnet ist, einen oberen Abschnitt (50), dessen Profil komplementär zum Profil des Kopfes der Schraube ist, und einen unteren Abschnitt (52) mit einem Profil, das zu demjenigen des Schaftes der Schraube komplementär ist, aufweist.

7. Vorrichtung nach Anspruch 2, **dadurch gekennzeichnet, dass** der ringförmige Körper (26) und der mittlere Teil (28) zwei Teile sind, die durch Formung aus Kunststoffen hergestellt sind.

8. Vorrichtung nach Anspruch 7, **dadurch gekennzeichnet, dass** der ringförmige Körper (26) ein Teil ist, das durch Formung aus Polyethylen niedriger Dichte hergestellt ist, und dadurch, dass der mittlere Teil (28) durch Formung aus Polyamid hergestellt ist.

## Claims

1. Device for fastening a component (12, 14) to an item of motor vehicle equipment (10), in particular to a fuel tank, having:
- a block (20) of vertical axial orientation that is able to form a spacer between the item of equipment (10) and the component (12, 14), has a cylindrical overall shape and is able to fastened to the item of equipment, in particular by adhesive bonding or welding;
- a bolt/nut assembly (22, 24) having a threaded shank that is able to extend axially through a hole (18) in the component, one of the two elements thereof being integral with the block (20) and the other being independent and able to be screwed on and off;
**characterized in that** the block (20) has an axial through-housing (48) in which the bolt (22) that is integral with the block (20) is arranged, the threaded shank of said bolt (22) protruding axially downward beyond a lower transverse face (42) of the block (20).

2. Device according to Claim 1, **characterized in that** the block (20) has:
- a peripheral annular body (26) forming a base, an upper transverse face of which is able to be fastened to the item of equipment, in particular by adhesive bonding or welding, and which delimits an internal cavity (30) ;
- a central part (28) arranged in said internal cavity (30), which extends axially downward and in which the axial through-housing (48, 50, 52) in which the bolt (22) is arranged is formed.

3. Device according to Claim 2, **characterized in that** said cavity (30) is a stepped cavity having a first, upper level with a larger diameter and a second, lower level with a smaller diameter, and **in that** the central part (28) has a complementary stepped cylindrical shape.

4. Device according to either of Claims 2 and 3, **characterized in that** the lower level of the central part (28) extends axially downward out of the annular body (26), and **in that** the lower level of the central part (28) is delimited by a lower transverse contact face (42) for the component.

5. Device according to Claim 2, **characterized in that** the central part (28) is rotationally locked with respect to the annular body (26).

6. Device according to any one of the preceding claims, **characterized in that** the axial through-housing in which the bolt is arranged has an upper portion (50), the profile of which is complementary to the profile of the head of the bolt, and a lower portion (52) with a profile complementary to that of the shank of the bolt.

7. Device according to Claim 2, **characterized in that** the annular body (26) and the central part (28) are two pieces produced by moulding plastics materials.

8. Device according to Claim 7, **characterized in that** the annular body (26) is a piece produced by moulding low density polyethylene, and **in that** the central part (28) is produced by moulding polyamide.
